# EUROPEAN PATENT SPECIFICATION

(11) **EP 1 133 920 B1**
(45) Date of publication and mention of the grant of the patent: **25.05.2005**
(21) Application number: 00830195.4
(22) Date of filing: 14.03.2000
(51) Int. Cl.: A21D 13/00, A21D 13/08, A23C 19/076, A23L 1/19

(54) **Method for the preparation of a filled savory snack**
Verfahren zur Herstellung eines gefülltes Snack-Produktes
Méthode de préparation d'un snack fourré

(43) Date of publication of application: 19.09.2001
(73) Proprietor: BARILLA G. E R. FRATELLI S.p.A., 43100 Parma (IT)
(72) Inventor: Buttini, Roberto, 43100 Parma (IT); Dangelico, Francesca, 43100 Parma (IT)
(74) Representative: Ferreccio, Rinaldo

(56) References cited:
- EP-A- 0 681 785
- EP-A- 0 916 263
- CH-A- 686 395
- US-A- 5 059 433
- US-A- 5 573 793

## Description

### Field of application

In general, the present invention relates to the technical field of food-processing industry.

In particular, the invention relates to a thermostable filling for bakery products such as savoury snacks.

The invention also relates to bakery products containing the above filling, endowed with high preservability at room temperature.

### Prior Art.

It is known that fresh filled savoury bakery products available in pastry shops, such as cream puffs, vol-au-vent etc., are prepared by filling a semi-finished product of pastry (for example, puff pastry), previously baked in oven, with a savoury cream (for example, cheese cream).

Filled products thus prepared undoubtedly have excellent organoleptic characteristics, but they have the serious disadvantage of being easily perishable, and thus they must be eaten within very few days, also when preserved at refrigerator temperature.

Moreover, a post-bake filling procedure is needed for preparing them, which is quite difficult and expensive, and hardly foreseeable for a production on an industrial scale.

On the other hand, a pre-bake filling method is hardly exploitable for the usual savoury creams, as these creams are scarcely thermostable.

Known edible creams are characterised by a high humidity (40-60%), which on one hand provides a palatable sensation of freshness and softness, but on the other hand, causes the poor preservability of the same creams. In fact, the high moisture content of the filling is accompanied by a high value of water activity A_{w} (0.90-0.99) which triggers the growth of bacteria and moulds, and causes the migration of water to the pastry shell, characterised by a lower A_{w}, which consequently loses its palatability.

At an industrial level, the remedy tried to solve the problem of the scarce preservability of filling creams is a drastic decreasing of their moisture content. Nevertheless, when decreasing to values of about 15% moisture, a significantly longer shelf life is obtained but the organoleptic characteristics of filling creams are irremediably impaired.

Another method of obtaining filled bakery products having a long shelf life is that of using fillings made of substantially anhydrous creams, that is, fat-based creams. However, in this way, the final product obtained is unbalanced from the nutritional point of view, organoleptically heavy and characterised by an acceleration of the water migration phenomenon mentioned above.

A solution proposed in the prior art (US 4 752 494) provides for the preparation of a thermostable cream with a low A_{w} value (lower than 0.7) but with a moisture content comparable to that of conventional creams, comprising a base matrix of a gelled aqueous dispersion containing Ca⁺⁺ ions, caseinate ions and corn syrup, fats, emulsifiers and flavours, the pre-bake filling of a dough preform with said cream, and the subsequent baking of the filled dough preform.

However, as only flavorings can be varied, such a cream is hardly susceptible of variations and additions and it is based on ingredients with a low nutritional value, such as sodium or calcium caseinate and whey permeate, that represents the source of Ca⁺⁺ ions.

Moreover, such a low A_{w} value (<0.7) brings about migration of water from the pastry towards the filling, thus causing a structural alteration of the components.

As a consequence, there still exists a need for alternative creamy fillings, which allow to produce filled bakery products, in particular savoury filled snacks, that may be preserved for a long time at room temperature, while being endowed with organoleptic properties that come close to those of extemporarily made products.

### Summary of the invention

Thus, the problem underlying the present invention was that of providing a filled savoury snack which could be preserved at room temperature for at least two months without the addition of preservatives, while maintaining excellent organoleptic properties of both the filling and the pastry shell.

It was surprisingly found that said problem was solved through a method comprising the steps of:
- preparing a mixture with a creamy texture having an A_{w} of 0.8-0.9 and a relative humidity of 25-30%, comprising from 20 to 30% (dry weight) of one or more dairy products and from 10 to 20% of grated bread;
- preparing a dough preform for bakery products having an A_{w} of 0.8-0.9 and a relative humidity of 25-30%;
- filling said dough preform with the mixture;
- subjecting the filled dough preform thus obtained to rising and baking.

The percentages specified above, as all percentages reported hereon, are to be regarded as in weight on the total weight.

Among the fresh, pasteurised or powdered dairy products that can be used in preparing the filling according to the invention, there are for example, cheeses, mascarpone, ricotta, milk, yoghurt, whey, etc.

The term "grated bread" refers not only to grated bread in the strict sense of the word, but also to other powdered bakery products, such as bread-sticks, rusks, and the like.

The dough preform can be made up of a sheet or a shell of puff pastry, Danish pastry dough, naturally rising dough or similar pastry dough commonly used in the production of snacks.

Preferably, the filling according to the invention further comprises sugary syrup in an amount comprised between 2 and 8%.

The addition of fats, in particular margarine, or oils in an amount comprised between 8 and 25% can be advantageous.

Other components that can be added are whey, potato flakes, proteins, fibres, flavours and savouriness enhancers.

The filling according to the invention is prepared by mixing the dairy product (which may have been possibly previously mixed with fats and/or syrup) with the grated bread (which may have been optionally previously mixed with powder whey and/or potato flakes) and by subjecting the mixture thus obtained to refining by means of rollers, so as to reduce the size of the particles of the solids of the mixture (up to an average diameter of about 20-40 µm, preferably 30 µm).

Thus, once the mixture has been made to have a creamy texture, it is extruded to be formed and laid on the dough preform, which is then sent to conventional steps of forming, rising and baking.

Should powder dairy products be used, an appropriate amount of water shall be added during the mixing step.

The final filled bakery product has a relative humidity of 18-22% and an A_{w} of 0.78-0.82, while the filling alone has a relative humidity of 25-30% and an A_{w} of 0.78-0.82. The cooked dough alone has a relative humidity of 16-20% and an A_{w} of 0.78-0.82.

At present, the reasons why the filling according to the invention, although having values of relative humidity and A_{w} quite similar to those of conventional hydrated creams, allows preparing filled snacks which maintain for a long time their hygienic, nutritional and organoleptic characteristics when stored at room temperature, are not known.

Nevertheless, it has clearly appeared that the presence of grated bread in the percentages indicated above plays a fundamental role in the maintenance of said properties, since the omission of such an ingredient has constantly implied the loss of such properties.

Further features and advantages of the present invention will appear more clearly from the following examples provided for illustrative and not limitative purpose.

### EXAMPLE 1

| Cheese-based filling | |
|---|---|
| Fresh cheese (R.H. about 50%) | 50% |
| Grated bread | 15% |
| Margarine | 10% |
| Powder whey | 10% |
| Glucose syrup | 5% |
| Potato flakes | 5% |
| Flavours and savouriness enhancers | 5% |

Fresh cheese was mixed with margarine and glucose syrup so as to obtain a creamy mixture.

The solid components (grated bread, powder whey, flavours and savouriness enhancers) were mixed separately until a homogeneous mixture was obtained. The powder mixture thus obtained was then added to the above-mentioned creamy mixture in a suitable mixer, until a homogeneous doughy mixture was obtained. Then, the latter was subjected to refining by rolling with rollers so as to obtain a plastic and smooth doughy mixture thanks to the reduction of the dimensions of solid particles (average diameter of about 30 µm).

The relative humidity of the mixture thus obtained was of about 27%, and the A_{w} was equal to 0.86.

### EXAMPLE 2

| Ricotta-based creamy filling | |
|---|---|
| Powder Ricotta (R.H. about %) | 30% |
| Grated bread | 20% |
| Water | 20% |
| Margarine | 10% |
| Powder whey | 5% |
| Glucose syrup | 5% |
| Potato flakes | 5% |
| Flavours and savouriness enhancers | 5% |

The powder ricotta was mixed with margarine and glucose syrup so as to obtain a creamy mixture.

The solid components (grated bread, powder whey, flavours and flavour enhancers) were mixed separately until a homogeneous mixture was obtained. The powder mixture thus obtained was then added to the above-mentioned creamy mixture in a suitable mixer; then, the water was added and the mixing continued up to obtaining a homogeneous doughy mixture. Then, the latter was subjected to refining by rolling with rollers so as to obtain a plastic and smooth doughy mixture thanks to the reduction of the dimensions of solid particles (average diameter of about 30 µm).

The relative humidity of the mixture thus obtained was of about 26%, and the A_{w} was equal to 0.85.

### EXAMPLE 3

The mixture according to example 1 was used for preparing filled savoury snacks according to the method illustrated below.

A sheet of Danish pastry dough was prepared starting from the following base mixture:

| | |
|---|---|
| Wheat flour | 47% |
| Water | 19% |
| Eggs | 9% |
| Natural yeast | 8% |
| Margarine | 5% |
| Glucose syrup | 4% |
| Sugar | 3% |
| Powder cheese | 3% |
| Brewer's yeast | 2% |

Using 100 parts of said pastry dough and 30 parts of margarine, a Danish pastry dough sheet was prepared according to methods known to those skilled in the art.

The pastry dough sheet thus obtained had a relative humidity of 30% and an A_{w} equal to 0.85.

The creamy mixture obtained according to example 1 was fed to an extruder to be laid on the above Danish pastry sheet (sheet thickness= 5 mm; filling/sheet weight ratio= 30/70).

A second sheet of Danish pastry dough was laid on the filling made up of the creamy mixture, after which a certain number of filled preforms were obtained through suitable cutting operations.

Finally, said semi-finished products were subjected to rising and to subsequent baking in an oven at a temperature of 200°C for about 15 minutes, finally obtaining filled savoury snacks having a relative humidity of about 20% and an A_{w} of about 0.80.

The relative humidity of the cooked pastry dough alone was of about 18%, whereas that of the filling was of about 28%.

The A_{w} of the cooked pastry dough was equal to that of the filling, and equal to about 0.80.

The savoury snacks thus prepared were packaged in sealed polypropylene packages and subjected to a preservability test at room temperature.

After a two-month period, neither microbiological alterations nor important variations of the organoleptic characteristics of the products were noted. The values of relative humidity and A_{w} of the overall snack, as well as the single ones of the cooked pastry dough and of the filling were substantially unaltered.

Neither important phenomena of loss of the pastry dough softness, nor of filling hardening, were noted.

## Claims

1. A method for preparing a filled savoury snack comprising the steps of:
- preparing a mixture with a creamy texture having an A_{w} of 0.8-0.9 and a relative humidity of 25-30%, comprising from 20 to 30% (dry weight) of one or more dairy products and from 10 to 20% of grated bread;
- preparing a dough preform for bakery products having an A_{w} of 0.8-0.9 and a relative humidity of 25-30%;
- filling said dough preform with said mixture;
- subjecting the filled preform thus obtained to rising and baking.

2. A method according to claim 1, wherein-said filling further comprises a sugary syrup in an amount comprised between 2 and 8%.

3. A method according to claim 2, wherein said filling further comprises fats, in particular margarine, or oils in an amount comprised between 8 and 25%.

4. A method according to any one of claims 1 to 3, wherein said dairy products are fresh, pasteurised or powdered and are chosen among a group comprising cheeses, mascarpone, ricotta, milk, yoghurt, and whey.

5. A method according to any one of the preceding claims, wherein the average diameter of the particles of the solids contained in said mixture is 20-40 µm.

6. A mixture with a creamy texture which may be used in the method according to claim 1, having an A_{w} of 0.8-0.9 and a relative humidity of 25-30%, comprising from 20 to 30% (dry weight) of one or more dairy products and from 10 to 20% of grated bread.

7. A mixture according to claim 6, further comprising a sugary syrup in an amount comprised between 2 and 8%.

8. A mixture according to claim 7, further comprising fats, in particular margarine, or oils in an amount comprised between 8 and 25%.

9. A mixture according to any one of claims 6 to 8, wherein said dairy products are fresh, pasteurised or powdered and are chosen among a group comprising cheeses, mascarpone, ricotta, milk, yoghurt, and whey.

10. A mixture according to any one of claims 6 to 9, wherein the average diameter of the particles of the solids contained therein is 20-40 µm.

11. A bakery product with a shelf life of at least two months, comprising a cooked pastry dough and a savoury filling, which has on the whole a relative humidity of 18-22% and an A_{w} of 0.78-0.82, while said filling has a relative humidity of 25-30% and an A_{w} of 0.78-0.82, said bakery product being obtainable with the method according to any one of the claims from 1 to 5.

12. A bakery product according to claim 11, wherein said cooked pastry dough has a relative humidity of 16-20% and an A_{w} of 0.78-0.82.

## Patentansprüche

1. Verfahren zur Zubereitung eines schmackhaften, gefüllten Häppchens, das folgende Schritte umfasst:
- Zubereitung einer Mischung mit cremiger Konsistenz mit einem A_{w} von 0,8 - 0,9 und einer relativen Feuchtigkeit von 25 - 30 %, die 20 bis 30 % (Trockengewicht) eines oder mehrerer Molkereiprodukte und 10 bis 20 % geriebenes Brot umfasst;
- Herstellung eines Teigvorformlings für Bäckereiprodukte mit einem A_{w} von 0,8 - 0,9 und einer relativen Feuchtigkeit von 25 - 30 %;
- Füllen des Teigvorformlings mit der Mischung;
- Unterziehung des so erhaltenen gefüllten Vorformlings unter den Aufgehungs- und den Backvorgang.

2. Verfahren nach Anspruch 1, bei dem die Füllung darüber hinaus einen zuckerigen Sirup zu einem Anteil zwischen 2 und 8 % umfasst.

3. Verfahren nach Anspruch 2, bei dem die Füllung darüber hinaus Fette, insbesondere Margarine, oder Öle zu einem Anteil zwischen 8 und 25 % umfasst.

4. Verfahren nach einem der Ansprüche 1 bis 3, bei dem die Molkereiprodukte frisch sind, pasteurisiert oder in Pulverform vorliegen, und aus einer Gruppe ausgewählt werden, welche Käse, Mascarpone, Ricotta, Milch, Joghurt und Molke umfasst.

5. Verfahren nach einem der vorhergehenden Ansprüche, bei dem der durchschnittliche Durchmesser der Feststoffpartikel, die in der Mischung enthalten sind, 20 - 40 µm beträgt.

6. Mischung mit cremiger Konsistenz, die in einem Verfahren nach Anspruch 1 benutzt werden kann, mit einem A_{w} von 0,8 - 0,9 und einer relativen Feuchtigkeit von 25 - 30 %, die 20 bis 30 % (Trockengewicht) eines oder mehrerer Molkereiprodukte und 10 bis 20 % geriebenes Brot umfasst.

7. Mischung nach Anspruch 6, die darüber hinaus einen zuckerigen Sirup zu einem Anteil zwischen 2 und 8 % umfasst.

8. Mischung nach Anspruch 7, welche darüber hinaus Fette, insbesondere Margarine, oder Öle zu einem Anteil zwischen 8 und 25 % umfasst.

9. Mischung nach einem der Ansprüche 6 bis 8, bei der die Molkereiprodukte frisch sind, pasteurisiert oder in Pulverform vorliegen, und aus einer Gruppe ausgewählt werden, welche Käse, Mascarpone, Ricotta, Milch, Joghurt und Molke umfasst.

10. Mischung nach einem der Ansprüche 6 bis 9, in welcher der durchschnittliche Durchmesser der darin enthaltenen Feststoffpartikel 20 - 40 µm beträgt.

11. Bäckereiprodukt mit einer Lebensdauer im Regal von mindestens 2 Monaten, welches einen Konditorteig und eine schmackhafte Füllung umfasst, und welches im Ganzen eine relative Feuchtigkeit von 18 - 22 % sowie einen A_{w} von 0,78 - 0,82 aufweist, während die Füllung eine relative Feuchtigkeit von 25 - 30 % und einen A_{w} von 0,78 - 0,82 hat, wobei das Bäckereiprodukt mit dem Verfahren nach einem der Ansprüche 1 bis 5 herstellbar ist.

12. Bäckereiprodukt nach Anspruch 11, bei dem der Konditorteig eine relative Feuchtigkeit von 16 - 20 % und einen A_{w} von 0,78 - 0,82 aufweist.

## Revendications

1. Procédé pour préparer un savoureux encas fourré, comprenant les étapes de :
- préparation d'un mélange à la texture crémeuse doté d'une A_{w} de 0,8 à 0,9 et d'une humidité relative de 25 à 30 %, comprenant entre 20 et 30 % (poids sec) d'un ou plusieurs produits laitiers et entre 10 et 20 % de pain émietté ;
- préparation d'une forme préalable de pâte pour produits pâtissiers ayant une A_{w} de 0,8 à 0,9 et une humidité relative de 25 à 30 % ;
- fourrage de ladite forme préalable de pâte avec ledit mélange ;
- soumission de la forme préalable remplie ainsi obtenue à la levée et à la cuisson.

2. Procédé selon la revendication 1, dans lequel ledit fourrage comprend en outre un sirop sucré dans une proportion comprise entre 2 et 8 %.

3. Procédé selon la revendication 2, dans lequel ledit fourrage comprend en outre des graisses, en particulier de la margarine, ou des huiles dans une proportion comprise entre 8 et 25 %.

4. Procédé selon l'une quelconque des revendications 1 à 3, dans lequel lesdits produits laitiers sont frais, pasteurisés ou en poudre et sont choisis dans un groupe comprenant des fromages, du mascarpone, de la ricotta, du lait, du yaourt et du lactosérum.

5. Procédé selon l'une quelconque des revendications précédentes, dans lequel le diamètre moyen des particules des solides contenus dans ledit mélange levé est de 20 à 40 µm.

6. Mélange à la texture crémeuse pouvant être utilisé dans le procédé selon la revendication 1, doté d'une A_{w} de 0,8 à 0,9 et d'une humidité relative de 25 à 30 %, comprenant entre 20 et 30 % (poids sec) d'un ou plusieurs produits laitiers et entre 10 et 20 % de pain émietté.

7. Mélange selon la revendication 6, qui comprend de plus un sirop sucré dans une proportion comprise entre 2 et 8 %.

8. Mélange selon la revendication 7, comprenant en outre des graisses, en particulier de la margarine, ou des huiles dans une proportion comprise entre 8 et 25 %.

9. Mélange selon l'une quelconque des revendications 6 à 8, dans lequel lesdits produits laitiers sont frais, pasteurisés ou en poudre et sont choisis dans un groupe comprenant des fromages, du mascarpone, de la ricotta, du lait, du yaourt et du lactosérum.

10. Mélange selon l'une quelconque des revendications 6 à 9, dont le diamètre moyen des particules des solides qu'il contient est de 20 à 40 µm.

11. Produit pâtissier dont la durée de conservation est d'au moins deux mois, comprenant une pâte pâtissière cuite et un fourrage savoureux, ayant globalement une humidité relative de 18 à 22 % et une A_{w} de 0,78 à 0,82, alors que ledit fourrage a une humidité relative de 25 à 30 % et une A_{w} de 0,78 à 0,82, ledit produit pâtissier pouvant être obtenu grâce au procédé selon l'une quelconque des revendications 1 à 5.

12. Produit pâtissier selon la revendication 11, dans lequel ladite pâte pâtissière cuite a une humidité relative de 16 à 20 % et une A_{w} de 0,78 à 0,82.
